# EUROPÄISCHE PATENTSCHRIFT

(11) **EP 3 325 379 B1**
(45) Veröffentlichungstag und Bekanntmachung des Hinweises auf die Patenterteilung: **02.09.2020**
(21) Anmeldenummer: 16745717.5
(22) Anmeldetag: 29.07.2016
(51) Int. Cl.: B65G 23/22, F16C 32/00

(54) **ANTRIEB FÜR EINE BANDFÖRDERANLAGE, VERFAHREN ZUM MONTIEREN EINES ANTRIEBS AN EINE BANDFÖRDERANLAGE SOWIE BANDFÖRDERANLAGE**
DRIVE FOR A CONVEYOR BELT ASSEMBLY, METHOD FOR MOUNTING A DRIVE TO A BELT CONVEYOR SYSTEM AND BELT CONVEYOR SYSTEM
ENTRAINEMENT POUR UNE INSTALLATION DE TRANSPORT A BANDE, PROCEDE DE MONTAGE D'UN ENTRAINEMENT SUR UNE INSTALLATION DE TRANSPORT A BANDE ET TRANSPORT A BANDE

(30) Priorität: 09.09.2015 EP 15184418
(43) Veröffentlichungstag der Anmeldung: 30.05.2018
(73) Patentinhaber: Siemens Aktiengesellschaft, 80333 München (DE)
(72) Erfinder: HELLMUTH, Torsten, 91058 Erlangen (DE); KROMPASKY, Erik, 25216 Nucice (CZ); WINKLER, Günther, 4785 Haibach (AT)
(86) Internationale Anmeldenummer: PCT/EP2016/068144
(87) Internationale Veröffentlichungsnummer: WO 2017/041958

(56) Entgegenhaltungen:
- EP-A1- 2 562 102
- CA-A1- 2 568 676
- DE-U- 1 842 769
- US-A1- 2006 272 523
- US-A1- 2013 306 443

## Beschreibung

Die Erfindung betrifft einen Antrieb für eine Bandförderanlage, umfassend einen permanenterregten Synchronmotor mit einem Stator und einem Rotor, wobei ein Spaltmaß zwischen dem Rotor und dem Stator ausgebildet ist. Die Erfindung betrifft weiterhin ein Verfahren zum Montieren eines Antriebs an eine Bandförderanlage umfassend eine an einer Antriebswelle angeordneten Antriebsrolle, wobei der Antrieb einen permanentmagneterregten Synchronmotor mit einem Stator und einem Rotor umfasst. Die Erfindung betrifft schließlich eine Bandförderanlage mit einem solchen Antrieb.

Eine Bandförderanlage mit einem Direktantrieb geht aus der EP 2 562 102 A1 hervor. Die dort beschriebene Bandförderanlage ist für die Schwerindustrie, insbesondere für die Rohstoff- oder Bergbauindustrie vorgesehen und umfasst eine Tragkonstruktion, ein Förderband und eine Antriebsvorrichtung zum Antrieb des Förderbands. Die Antriebsvorrichtung umfasst eine Antriebswelle, mindestens eine Antriebswellen-Lageranordnung, eine Antriebsrolle und einen fremderregten Antriebsmotor in Form eines frequenzumrichtergespeisten Wechselstrom-Synchronmotors mit einem Stator und einem Rotor. Die Antriebswelle und der Antriebsmotor sind getriebelos miteinander verbunden und es liegt eine koaxiale Anordnung von Rotor und Antriebswelle vor, wobei die Antriebswelle durch den Rotor geführt ist. Es handelt sich dabei um einen Direktantrieb, bei dem sich zwischen dem Antriebsmotor und der Antriebswelle keinerlei Bauteile befinden, die die Rotordrehzahl in eine davon abweichende Antriebswellendrehzahl übersetzen. Die Antriebswelle wird somit mit gleicher Drehzahl gedreht, wie diese vom Rotor vorgegeben wird. Sowohl die Antriebswelle als auch der Stator des Antriebsmotors sind auf der stabilen Tragkonstruktion angeordnet, damit ein für den ordnungsgemäßen Motorbetrieb erforderliche Spaltmaß zwischen Rotor und Stator gewährleistet ist. Das Spaltmaß zwischen Rotor und Stator liegt bei einer derartigen Anwendung üblicherweise bei einem Wert von 5 bis 15 mm. Um einen ordnungsgemäßen Betrieb sicherzustellen, liegt eine tolerierbare Verschiebung zwischen Rotor und Stator üblicherweise im Bereich von 10 bis 15% des Spaltmaßes.

Bei einem derartigen lagerlosen Direktantrieb werden der Rotor und der Stator separat transportiert. Erst bei der Montage erfolgt durch das Anflanschen des Rotors an die Antriebswelle die Komplettierung zu einem Motor. Insbesondere bei permanenterregten Motoren, auch als permanentmagneterregten Motoren bezeichnet, ist diese Montage auf der Baustelle sehr anspruchsvoll, da die magnetischen Kräfte zwischen Rotor und Stator kaum zu beherrschen sind. Wellen- und lagerlose permanentmagneterregte Synchronmaschinen wurden für die Anwendung in einer Bandförderanlage für die Rohstoff- oder Bergbauindustrie deshalb bisher in der Regel nicht eingesetzt. US 2013/0306443 A1 beschreibt einen Antrieb nach dem Oberbegriff des Anspruchs 1.

Um die Vorteile (keine eigene Welle, keine eigenen Lager, dadurch keine Lagerwartung, keine Kupplung zwischen Motor und Antriebstrommel) eines lagerlosen Direktantriebes verstärkt nutzen zu können, ist es erforderlich den Antrieb als eine Einheit sicher zu transportieren und schnell zu montieren.

Aufgabe der Erfindung ist daher eine sichere Montage eines wellenlosen Antriebs eines permanenterregten Synchronmotors zu gewährleisten.

Die Aufgabe wird erfindungsgemäß gelöst durch einen Antrieb nach Anspruch 1.

Die Aufgabe wird weiterhin erfindungsgemäß gelöst durch ein Verfahren nach Anspruch 6.

Die Aufgabe wird schließlich erfindungsgemäß gelöst durch eine Bandförderanlage mit einem solchen Antrieb.

Die in Bezug auf den Antrieb nachstehend angeführten Vorteile und bevorzugten Ausgestaltungen lassen sich sinngemäß auf das Verfahren und die Bandförderanlage übertragen.

Bei dem Antrieb handelt es sich um einen Direktantrieb, bei dem sich zwischen dem Antriebsmotor und der Antriebswelle keine Getriebeelemente befinden, welche die Rotordrehzahl in eine davon abweichende Antriebswellendrehzahl übersetzen. Der Antrieb ist dabei im montierten Zustand insbesondere zwischen der Antriebstrommel und eine Antriebswellen-Lageranordnung angeordnet.

Die Erfindung basiert auf der Überlegung beim Transport, bei der Montage des Antriebs sowie später bei Wartungsarbeiten an der Bandförderanlage ein konstantes Spaltmaß einzuhalten, indem der Stator und der Rotor mit Hilfe einer Haltevorrichtung zueinander fixiert werden. Dies wird über eine direkte oder indirekte Verbindung zwischen der Haltevorrichtung auf der einen Seite und dem Stator bzw. dem Rotor auf der anderen Seite ermöglicht. Dabei wird eine Berührung zwischen Stator und Rotor verhindert. Nach erfolgter Montage, wenn der Stator und der Rotor in ihrer Endposition in der Bandförderanlage fest angebracht sind, wird die Haltevorrichtung über die lösbaren ersten Befestigungsmittel vom Stator getrennt und/oder über die lösbaren zweiten Befestigungsmittel vom Rotor getrennt, so dass eine Rotation des Rotors gegenüber dem Stator im Betrieb der Bandförderanlage möglich ist.

Der wesentliche Vorteil einer solchen Haltevorrichtung sind die hohen Flexibilität und Sicherheit bei der Montage und Demontage des Antriebs. Insbesondere wird das Problem der starken magnetischen Kräfte zwischen Rotor und Stator beim eingesetzten permanentmagneterregten bestückten Rotor überwunden. Somit ist es möglich den Antrieb als Ganzes, und nicht seine einzelne Bestandteile, zu transportieren und zu installieren.

Die Bandförderanlage, die einen solchen Antrieb enthält, weist auch weitere Vorteile auf. Bei einer Positionierung des Direktantriebes zwischen der Antriebstrommel und der Antriebswellen-Lageranordnung wird die Durchbiegung der Antriebswelle stark reduziert. Ein weiterer Vorteil dieser Anordnung ist die uneingeschränkte Zugänglichkeit der Antriebswellen-Lageranordnung. Somit kann ein Lagerwechsel ohne Demontage des Antriebes durchgeführt werden.

Gemäß einer bevorzugten Ausführung sind zumindest die zweiten Befestigungsmittel zum Lösen der Verbindung der Haltevorrichtung zum Rotor lösbar ausgebildet, so dass die Haltevorrichtung nur vom Rotor entkoppelt wird. Im Betrieb der der Bandförderanlage ist die Haltevorrichtung weiterhin mit dem Stator gekoppelt. Der wesentliche Vorteil hierbei ist, dass im Betrieb die Haltevorrichtung stationär bleibt, d.h. sie dreht sich nicht mit dem Rotor mit. Auf diese Weise wird eine ruhende Lagerung der Haltevorrichtung gewährleistet, welche in der Regel weniger störungsanfälliger ist, als wenn die Haltevorrichtung im Betrieb mit rotieren würde.

Erfindungsgemäß ist die Haltevorrichtung derart ausgebildet, dass sich bei gelösten ersten oder zweiten Befestigungsmitteln ein Luftspalt zwischen der Haltevorrichtung und dem Stator bzw. Rotor einstellt. Insbesondere wird die Haltevorrichtung, je nachdem ob die Verbindung zum Stator oder zum Rotor gelöst wird, von diesem auf Abstand gehalten, so dass kein Kontakt vorliegt, der im Betrieb die einwandfreie Funktion des Antriebs beeinträchtigen könnte.

Weiterhin bevorzugt ist die Haltevorrichtung dafür ausgebildet eine Dichtung aufzunehmen. Somit wird die Haltevorrichtung während des Betriebes der Bandförderanlage genutzt, den Direktantrieb gegen Staub und Feuchtigkeit zu schützen.

Erfindungsgemäß ist die Haltevorrichtung nach Art eines abgewinkelten Flanschrings ausgebildet, der insbesondere einen durchgehenden Umfang aufweist. Durch ihre ringförmige Ausgestaltung ist die Haltevorrichtung besonders gut geeignet für eine direkte oder indirekte Verbindung stirnseitig am Stator und Rotor, wobei möglichst große Kontaktflächen vorliegen. Im Bereich dieser Kontaktflächen sind die Befestigungsmittel vorgesehen, die insbesondere gleichmäßig um den Umfang des Flanschrings verteilt sind.

Die Haltevorrichtung wird auf besonders einfache Weise mit dem Rotor und Stator verbunden, indem vorteilhafterweise die ersten und/oder die Befestigungsmittel als Schrauben ausgebildet sind. Eine Schraubenverbindung ist leicht herzustellen und zu lösen. Zudem kann sie bei Wartungs- und Reparaturarbeiten mehrmals hergestellt und gelöst werden, der Einsatz von neuen bzw. weiteren Befestigungsmittel ist somit nicht erforderlich.

Zweckdienlicherweise ist die Haltevorrichtung aus einem metallischen Werkstoff, insbesondere aus Stahl, ausgebildet. Ein metallischer Werkstoff entspricht bestens den Anforderungen bezüglich Stabilität und Belastbarkeit der Haltevorrichtung beim ihrem Einsatz zum Fixieren des Rotors gegenüber dem Stator.

Gemäß einer bevorzugten Ausführung des Verfahrens werden der erste und der zweite Verfahrensschritt an einem anderen Ort als der Montageort der weiteren Schritte durchgeführt. Somit wird der Rotor bereits beim Antriebshersteller in das Statorgehäuse hineingeschoben und dort über die Haltevorrichtung fixiert, denn die Durchführung dieser anspruchsvollen Arbeit ist auf einer Baustelle nicht oder nur unter sehr hohem Aufwand möglich.

Im Hinblick auf eine verbesserte Zugänglichkeit zu den Komponenten der Bandförderanlage wird gemäß einer weiteren bevorzugten Ausführung des Verfahrens bei Wartungs- und Reparaturarbeiten an der Bandförderanlage die gelösten ersten oder zweiten Befestigungsmittel erneut zur Herstellung der Verbindung zwischen dem Rotor und dem Stator eingesetzt und der Antrieb wird von der Antriebswelle getrennt. Bei erforderlichen Arbeiten z.B. an der Antriebswelle oder der Antriebstrommel wird die nach der Montage des Antriebs gelöste Verbindung zwischen der Haltevorrichtung und dem Rotor bzw. Stator erneut hergestellt. Auf diese Weise wird das Spaltmaß konstant gehalten und der Rotor kann von der Antriebswelle abgekoppelt werden, ohne dass der Rotor aus dem Statorgehäuse bewegt werden muss.

Ausführungsbeispiele der Erfindung werden anhand einer Zeichnung näher erläutert. Hierin zeigen:
- FIG 1: in einem Längsschnitt eine erste Ausführungsvariante einer Bandförderanlage mit einem Direktantrieb und einer Haltevorrichtung für den Antrieb,
- FIG 2: in einem Längsschnitt den Zusammenbau der Bandförderanlage gemäß FIG 1, und
- FIG 3: in einem Längsschnitt eine zweite Ausführungsvariante einer Bandförderanlage mit einem Direktantrieb und einer Haltevorrichtung für den Antrieb.

Gleiche Bezugszeichen haben in den verschiedenen Figuren die gleiche Bedeutung.

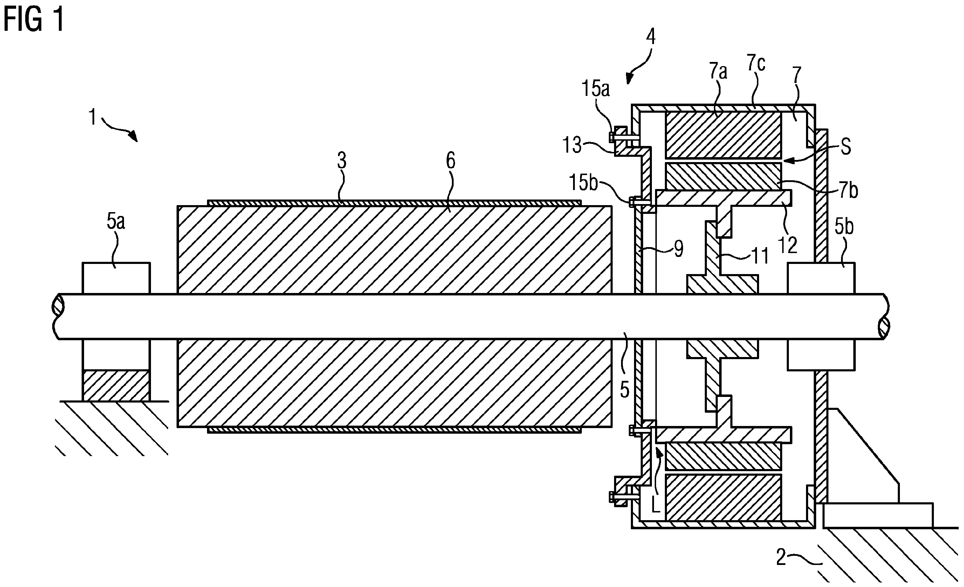

FIG 1 zeigt schematisch und stark vereinfacht eine Bandförderanlage 1 für die Schwerindustrie, insbesondere für die Rohstoff- oder Bergbauindustrie. Die Bandförderanlage 1 ist auf einer Tragkonstruktion 2 gelagert. Die Bandförderanlage 1 gemäß FIG 1 umfasst ein Förderband 3 und einen Antrieb 4 zum Antreiben des Förderbands 3, eine Antriebswelle 5, zwei Antriebswellen-Lageranordnungen 5a, 5b und eine Antriebsrolle 6. Die Antriebsrolle 6 ist hier aus Vollmaterial gebildet, kann aber genauso hohl ausgebildet sein. Die Antriebsrolle 6 und der Antrieb 4 sind zwischen beiden Antriebswellen-Lageranordnungen 5a, 5b angeordnet.

An der Antriebswelle 5 seitlich der Antriebsrolle 6 kann optional auf der dem Antriebsmotor 7 abgewandten Seite ein weiterer Antriebsmotor angeordnet werden. Auch die Anordnung weiterer Antriebsrollen 6 auf der Antriebswelle 5 ist möglich.

Der Antrieb 4 ist in seinem ursprünglichen Zustand vor dem Einbau in die Bandförderanlage 1 ein wellenloser, lagerloser Antrieb, der einen permanenterregten Synchronmotor 7, weiterhin als Antriebsmotor bezeichnet, mit einem Stator 7a und einem Rotor 7b umfasst. Der Rotor 7b und der Stator 7a befinden sich in einem Motorgehäuse 7c, mit welchem der Stator 7a fest verbunden ist. Im eingebauten Zustand des Antriebs 4 an der den Antriebrolle 6 zugewandten Seite des Motorgehäuses 7c ist eine Dichtung 9 angebracht, welche den Antrieb 4 vor Staub und Feuchtigkeit schützt.

Die Antriebswelle 5 und der Antriebsmotor 7 sind getriebelos miteinander verbunden, wobei eine koaxiale Anordnung vom Rotor 7b und der Antriebswelle 5 vorliegt. Die Antriebswelle 5 ist durch den Rotor 7b hindurch geführt und ragt über den Rotor 7b hinaus. Zur Befestigung des Rotors 7b an der Antriebswelle 5 ist im gezeigten Ausführungsbeispiel ein Wellenflansch 11 vorgesehen. Mit 12 wird hierbei eine Rotorhohlwelle bezeichnet, auf der ein Rotorpaket (inkl. Magneten) aufgebracht ist und kann aber als Komponente des Rotors 7b angesehen werden.

Der Abstand zwischen dem Stator 7a und dem Rotor 7b wird als Spaltmaß S bezeichnet und dessen Einhaltung ist entscheidend für den ordnungsgemäßen Betrieb des Antriebsmotors 7. Um diesen Abstand bei der Montage des Antriebs 4 oder bei Reparatur- und Wartungsarbeiten an der Bandförderanlage 1 einzuhalten, ist eine Haltevorrichtung 13 vorgesehen ist, welche den Stator 7a und den Rotor 7b zueinander fixiert.

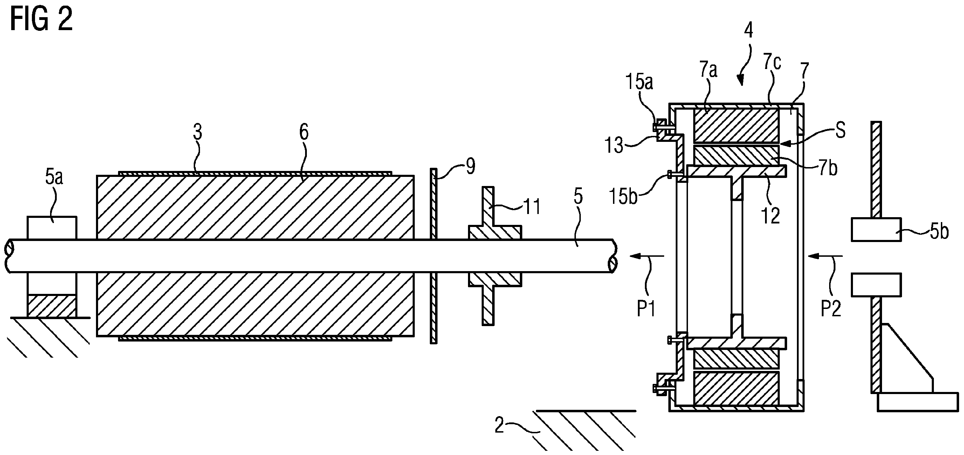

Die Haltevorrichtung 13 ist hierbei als ein angewinkelter, metallischer Flanschring aus Stahl ausgestaltet und weist einen im Wesentlichen durchgehenden Umfang auf. Der Flanschring 13 ist dabei derart geformt, dass er mit einer ringförmigen Seite auf dem Motorgehäuse 7c aufliegt und im Bereich der Kontaktfläche mit dem Motorgehäuse 7c und somit indirekt mit dem Stator 7a verbunden ist. Über eine weitere ringförmige Seite ist der Flanschring 13 auf ähnlicher Weise indirekt auch mit dem Rotor 7b verbunden. Zum Befestigen der Haltevorrichtung 13 am Stator 7a bzw. Motorgehäuse 7c sind erste Befestigungsmittel 15a und zum Befestigen der Haltevorrichtung 13 am Rotor 7b sind zweite Befestigungsmittel 15b vorgesehen (siehe FIG 2), welche im gezeigten Ausführungsbeispiel als Schrauben ausgestaltet sind. Es ist jedoch möglich auch andere Arten von Befestigungsmitteln einzusetzen, wobei jedoch zu beachten ist, dass sie für eine lösbare Verbindung zwischen der Haltevorrichtung 13 und dem Stator 7a bzw. dem Rotor 7b geeignet sein sollen.

Die Montage des Antriebs 4 und die Funktion der Haltevorrichtung 13 werden anhand von FIG 2 näher erläutert.

In einem ersten Schritt zur Herstellung des Antriebs 4 wird der Rotor 7b in den Stator 7a hineingeschoben. Als nächstes wird mittels der Haltevorrichtung 13, welche über die erste Schrauben 15a am Stator 7a befestigt wird und über die zweiten Schrauben 15b am Rotor 7b befestigt ist, der Rotor 7b gegenüber dem Stator 7a fixiert. Auf diese Weise wird das Spaltmaß S zwischen dem Rotor 7b und dem Stator 7a unverändert gehalten. Die Fertigung des Antriebs 4 erfolgt insbesondere an einem anderen Ort als der Betriebsort der Bandförderanlage 1. Somit kann der Antrieb 4 als eine Einheit, wie in FIG 2 dargestellt, für den Einsatz in einer Bandförderanlage 1 transportiert und vor Ort eingebaut werden.

Erst beim Einbau des Antriebs 4 in die Bandförderanlage 1 wird der Antriebsmotor 7 durch eine Welle, nämlich die Antriebswelle 5, ergänzt, die mit dem Rotor 7b getriebelos verbunden ist und von diesem in Rotation versetzt wird.

Der Wellenflansch 11 und die Dichtung 9 sind hierbei an der Antriebswelle 5 angeordnet. Wenn der Antrieb 4 auf die Antriebswelle 5 aufgesetzt wird, angedeutet durch den Pfeil P1, wird die Verbindung über die Schrauben 15b zwischen der Haltevorrichtung 13 und dem Rotor 7b gelöst, um den Betriebszustand des Antriebs 4 gemäß FIG 1 herzustellen, in dem der Rotor 7b sich drehen kann. Die Verbindung 15b darf erst gelöst werden, wenn auch das Motorgehäuse 7c mit einem Lagerschild des Lagers 5b verschraubt worden ist. Dadurch ist erst die Einhaltung des Luftspaltes S sichergestellt. Damit die Drehbewegung des Rotors 7b durch die Haltevorrichtung 13 nicht beeinträchtigt wird, wird die Haltevorrichtung 13 auf Abstand zum Antrieb 4 gefahren, so dass ein Luftspalt L zwischen der Haltevorrichtung 13 und dem Rotor 7b entsteht (siehe FIG 1 und FIG 2). Die Haltevorrichtung 13 bleibt jedoch mit dem Stator 7a fest verbunden und dient weiterhin als Träger für die Dichtung 9. Beispielsweise wird dabei die Dichtung 9 über die Schrauben 15b mit der Haltevorrichtung 13 verbunden.

Denkbar ist auch alternativ die Schrauben 15a zu lösen, so dass die Haltevorrichtung 13 vom Stator gelöst wird und lediglich am Rotor 7b befestigt bleibt und mit diesem mit rotiert.

Zum Komplettierung der Montage des Antriebs 4 wird zudem die Antriebswellen-Lageranordnung 5b auf die Antriebswelle 5 montiert, was durch den Pfeil P2 angedeutet ist. Im gezeigten Ausführungsbeispiel ist die Antriebswellen-Lageranordnung 5b im Zusammengebauten Zustand im Motorgehäuse 7c integriert.

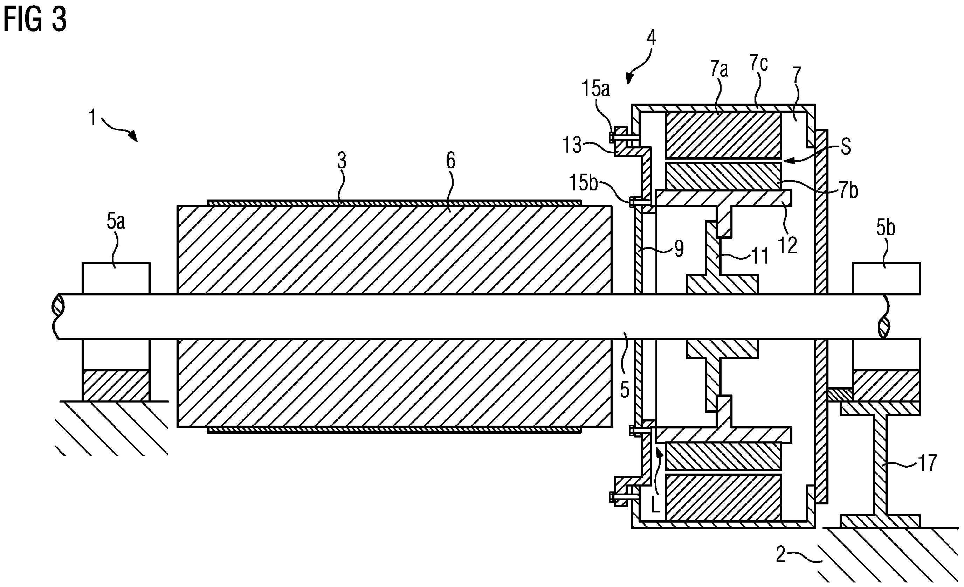

FIG 3 zeigt schematisch im Längsschnitt einen zweiten Antrieb 4 für eine Bandförderanlage 1. Die Antrieb 4 umfasst ebenfalls eine Antriebswelle 5, zwei Antriebswellen-Lageranordnungen 5a, 5b, eine Antriebsrolle 6 und einen permanenterregten Antriebsmotor 7 mit einem Stator 7a und einem Rotor 7b. Der Unterschied zur ersten Ausführungsform der Betriebsförderanlage liegt darin, dass die Antriebswellen-Lageranordnung 5b nicht Bestandteil des Motorgehäuses 7c ist, sondern auf einer separaten Lagerkonstruktion 17, die insbesondere aus Stahl gebildet ist, gelagert ist.

Einen großen Vorteil der oben beschriebenen Anordnungen stellt die gute Zugänglichkeit der Antriebswellen-Lageranordnungen 5a, 5b im Wartungsfall dar, ohne dass ein Ausbau des Antriebs 4 überhaupt notwendig ist. Im Falle von Wartungsarbeiten z.B. an der Antriebstrommel 6 wird die Haltevorrichtung 13 erneut mit dem Rotor 7b verbunden, damit das Spaltmaß S fixiert wird, und dann kann der Antrieb 4 ausgebaut werden.

## Patentansprüche

1. Antrieb (4) für eine Bandförderanlage (1), umfassend einen permanenterregten Synchronmotor (7) mit einem Stator (7a) und einem Rotor (7b), wobei ein Spaltmaß (S) zwischen dem Rotor (7b) und dem Stator (7a) ausgebildet ist, wobei eine Haltevorrichtung (13) vorgesehen ist, welche über erste Befestigungsmittel (15a) am Stator (7a) befestigt ist und über zweite Befestigungsmittel (15b) am Rotor (7b) befestigt ist, wobei die ersten Befestigungsmittel (15a) und/oder die zweiten Befestigungsmittel (15b) lösbar ausgebildet sind, wobei die Haltevorrichtung (13) dafür ausgebildet ist, dass sich bei gelösten ersten oder zweiten Befestigungsmitteln (15a, 15b) ein Luftspalt (L) zwischen der Haltevorrichtung (13) und dem Stator (7a) bzw. Rotor (7b) einstellt, **dadurch gekennzeichnet, dass** die Haltevorrichtung (13) nach Art eines abgewinkelten Flanschrings ausgebildet ist, der insbesondere einen durchgehenden Umfang aufweist.

2. Antrieb (4) nach Anspruch 1, **dadurch gekennzeichnet, dass** zumindest die zweiten Befestigungsmittel (15a) zum Lösen der Verbindung der Haltevorrichtung (14) zum Rotor (7b) lösbar ausgebildet sind.

3. Antrieb (4) nach einem der vorhergehenden Ansprüche, **dadurch gekennzeichnet, dass** die Haltevorrichtung (13) dafür ausgebildet ist, eine Dichtung (9) aufzunehmen.

4. Antrieb (4) nach einem der vorhergehenden Ansprüche, **dadurch gekennzeichnet, dass** die ersten Befestigungsmittel (15a) und/oder die zweiten Befestigungsmittel (15b) als Schrauben ausgebildet sind.

5. Antrieb (4) nach einem der vorhergehenden Ansprüche, **dadurch gekennzeichnet, dass** die Haltevorrichtung (13) aus einem metallischen Werkstoff, insbesondere aus Stahl, ausgebildet ist.

6. Verfahren zum Montieren eines Antriebs (4) an eine Bandförderanlage (1) umfassend eine an einer Antriebswelle (5) angeordneten Antriebsrolle (6), wobei der Antrieb (4) einen permanenterregten Synchronmotor (7) mit einem Stator (7a) und einem Rotor (7b) umfasst,
**dadurch gekennzeichnet, dass**
- in einem ersten Schritt der Rotor (7b) in den Stator (7a) hineingeschoben wird,
- in einem zweiten Schritt mittels einer Haltevorrichtung (13), welche über erste Befestigungsmittel (15a) am Stator (7b) befestigt wird und über zweite Befestigungsmittel (15b) am Rotor (7b) befestigt wird, der Rotor (7b) gegenüber dem Stator (7a) fixiert wird, so dass ein Spaltmaß (S) zwischen dem Rotor (7b) und dem Stator (7a) eingehalten wird,
- in einem dritten Schritt der Antrieb (4) und die Antriebswelle (5) getriebelos miteinander verbunden werden, und
- in einem vierten Schritt die ersten Befestigungsmittel (15a) und/oder die zweiten Befestigungsmittel (15b) gelöst werden,
- wobei als Haltevorrichtung (13) ein abgewinkelter Flanschring, der insbesondere durchgehenden Umfang aufweist, eingesetzt wird.

7. Verfahren nach Anspruch 6, **dadurch gekennzeichnet, dass** zumindest die zweiten Befestigungsmittel (15b) gelöst werden und der Rotor (7b) von der Haltevorrichtung (13) getrennt wird.

8. Verfahren nach Anspruch 6 oder 7, **dadurch gekennzeichnet, dass** durch das Lösen der ersten oder der zweiten Befestigungsmittel (15a,15b) ein Luftspalt (L) zwischen der Haltevorrichtung (13) und dem Stator (7a) bzw. Rotor (7b) ausgebildet wird.

9. Verfahren nach Anspruch 8, **dadurch gekennzeichnet, dass** eine Dichtung (9) an die Haltevorrichtung (13) angebracht wird.

10. Verfahren nach einem der Ansprüche 6 bis 9, **dadurch gekennzeichnet, dass** die Haltevorrichtung (13) über Schraubverbindungen mit dem Stator (7a) und/oder Rotor (7b) verbunden wird.

11. Verfahren nach einem der Ansprüche 6 bis 10, **dadurch gekennzeichnet , dass** eine Haltevorrichtung (13) aus einem metallischen Werkstoff, insbesondere aus Stahl, eingesetzt wird.

12. Verfahren nach einem der Ansprüche 6 bis 11, **dadurch gekennzeichnet , dass** der erste und der zweite Schritt an einem anderen Ort als der Montageort der weiteren Schritte durchgeführt werden.

13. Verfahren nach einem der Ansprüche 6 bis 12, **dadurch gekennzeichnet, dass** bei Wartungsarbeiten an der Bandförderanlage (1) die gelösten ersten Befestigungsmittel (15a) und/oder zweiten Befestigungsmittel (15b) erneut zur Herstellung der Verbindung zwischen dem Stator (7a) und dem Rotor (7b) eingesetzt werden und der Antrieb (4) von der Antriebswelle (5) getrennt wird.

14. Bandförderanlage (1) mit einem wellenlosen Antrieb (4) nach einem der Ansprüche 1 bis 5.

## Claims

1. Drive (4) for a belt conveyor system (1), comprising a permanently excited synchronous motor (7) having a stator (7a) and a rotor (7b), wherein a gap size (S) is formed between the rotor (7b) and the stator (7a), **wherein** a holding device (13) is provided which is secured to the stator (7a) by way of first securing means (15a) and to the rotor (7b) by way of second securing means (15b), wherein the first securing means (15a) and/or the second securing means (15b) are designed to be releasable, wherein the holding device (13) is designed in such a manner that an air gap (L) is created between the holding device (13) and the stator (7a) or rotor (7b) when the first or second securing means (15a,15b) are released, **characterised in that** the holding device (13) is designed in the form of an angled flange ring which in particular has a continuous circumference.

2. Drive (4) according to claim 1, **characterised in that** at least the second securing means (15a) for releasing the connection of the holding device (14) to the rotor (7b) are designed as releasable.

3. Drive (4) according to one of the preceding claims, **characterised in that** the holding device (13) is designed in order to accommodate a seal (9).

4. Drive (4) according to one of the preceding claims, **characterised in that** the first securing means (15a) and/or the second securing means (15b) are designed as screws.

5. Drive (4) according to one of the preceding claims, **characterised in that** the holding device (13) is made of a metallic material, in particular from steel.

6. Method for mounting a drive (4) on a belt conveyor system (1) comprising a drive roller (6) arranged on a drive shaft (5), wherein the drive (4) comprises a permanently excited synchronous motor (7) having a stator (7a) and a rotor (7b), **characterised in that**
- in a first step, the rotor (7b) is inserted into the stator (7a),
- in a second step, the rotor (7b) is fixed in relation to the stator (7a) by means of a holding device (13) which is secured to the stator (7b) by way of first securing means (15a) and to the rotor (7b) by way of second securing means (15b), so that a gap size (S) is maintained between the rotor (7b) and the stator (7a),
- in a third step, the drive (4) and the drive shaft (5) are connected to each other in a gearless fashion, and
- in a fourth step, the first securing means (15a) and/or the second securing means (15b) are released,
- wherein an angled flange ring which in particular has a continuous circumference is used as the holding device (13) .

7. Method according to claim 6, **characterised in that** at least the second securing means (15b) are released and the rotor (7b) is separated from the holding device (13).

8. Method according to claim 6 or 7, **characterised in that** an air gap (L) is created between the holding device (13) and the stator (7a) or rotor (7b) when the first or second securing means (15a,15b) are released.

9. Method according to claim 8, **characterised in that** a seal (9) is fitted to the holding device (13).

10. Method according to one of claims 6 to 9, **characterised in that** the holding device (13) is connected to the stator (7a) and/or rotor (7b) by way of screw connections.

11. Method according to one of claims 6 to 10, **characterised in that** a holding device (13) made of a metallic material, in particular from steel, is used.

12. Method according to one of claims 6 to 11, **characterised in that** the first and the second steps are carried out at a location other than the assembly site of the subsequent steps.

13. Method according to one of claims 6 to 12, **characterised in that** for maintenance work on the belt conveyor system (1) the released first securing means (15a) and/or second securing means (15b) are used again in order to establish the connection between the stator (7a) and the rotor (7b), and the drive (4) is separated from the drive shaft (5).

14. Belt conveyor system (1) having a shaftless drive (4) according to one of claims 1 to 5.

## Revendications

1. Entraînement (4) d'une installation (1) de convoyeur à courroie, comprenant un moteur (7) synchrone à excitation permanente ayant un stator (7a) et un rotor (7b), une valeur (S) d'entrefer étant constituée entre le rotor (7b) et le stator (7a), dans lequel il est prévu un système (13) de maintien, qui est fixé au stator (7a) par des premiers moyens (15a) de fixation et qui est fixé au rotor (7b) par des deuxièmes moyens (15b) de fixation, les premiers moyens (15a) de fixation et/ou les deuxièmes moyens (15b) de fixation étant constitués de manière amovible, le système (13) de maintien étant constitué pour régler, lorsque les premiers ou les deuxièmes moyens (15a, 15b) de fixation sont défaits, un entrefer (L) entre le système (13) de maintien et le stator (7a) ou le rotor (7b), **caractérisé en ce que** le système (13) de maintien est constitué à la manière d'un anneau de bride coudé, qui a notamment un pourtour continu.

2. Entraînement (4) suivant la revendication 1, **caractérisé en ce qu'**au moins les deuxièmes moyens (15a) de fixation sont constitués de manière amovible pour faire cesser la liaison du système (14) de maintien au rotor (7b).

3. Entraînement (4) suivant l'une des revendications précédentes, **caractérisé en ce que** le système (13) de maintien est constitué pour recevoir une étanchéité (9).

4. Entraînement (4) suivant l'une des revendications précédentes, **caractérisé en ce que** les premiers moyens (15a) de fixation et/ou les deuxièmes moyens (15b) de fixation sont constitués sous la forme de vis.

5. Entraînement (4) suivant l'une des revendications précédentes, **caractérisé en ce que** le système (13) de maintien est en un matériau métallique, notamment en acier.

6. Procédé de montage d'un entraînement (4) sur une installation (1) de convoyeur à courroie, comprenant un rouleau (6) d'entraînement monté sur un arbre (5) d'entraînement, l'entraînement (4) comprenant un moteur (7) synchrone à excitation permanente ayant un stator (7a) et un rotor (7b),
**caractérisé en ce que**
- dans un premier stade, on glisse le rotor (7b) dans le stator (7a),
- dans un deuxième stade, au moyen d'un système (13) de maintien, qui est fixé au stator (7a) par des premiers moyens (15a) de fixation et qui est fixé au rotor (7b) par des deuxièmes moyens (15b) de fixation, on immobilise le rotor (7b) par rapport au stator (7a), de manière à maintenir une valeur (S) d'entrefer entre le rotor (7b) et le stator (7a),
- dans un troisième stade, on relie entre eux, sans transmission, l'entraînement (4) et l'arbre (5) d'entraînement, et
- dans un quatrième stade, on défait les premiers moyens (15a) de fixation et/ou les deuxièmes moyens (15b) de fixation,
- dans lequel on utilise, comme système (13) de maintien, un anneau de bride coudé, qui a notamment un pourtour continu.

7. Procédé suivant la revendication 6, **caractérisé en ce qu'**on défait au moins les deuxièmes moyens (15b) de fixation et on sépare le rotor (7b) du système (13) de maintien.

8. Procédé suivant la revendication 6 ou 7, **caractérisé en ce que**, en défaisant les premiers ou les deuxièmes moyens (15a, 15b) de fixation, on constitue un entrefer (L) entre le système (13) de maintien et le stator (7a) ou le rotor (7b).

9. Procédé suivant la revendication 8, **caractérisé en ce que** l'on monte une étanchéité (9) sur le système (13) de maintien.

10. Procédé suivant l'une des revendications 6 à 9, **caractérisé en ce que** l'on relie le système (13) de maintien au stator (7a) et/ou au rotor (7b) par des vissages.

11. Procédé suivant l'une des revendications 6 à 10, **caractérisé en ce que** l'on utilise un système (13) de maintien d'un matériau métallique, notamment en acier.

12. Procédé suivant l'une des revendications 6 à 11, **caractérisé en ce que** l'on effectue le premier et le deuxième stades en un emplacement autre que l'emplacement de montage des autres stades.

13. Procédé suivant l'une des revendications 6 à 12, **caractérisé en ce que**, lors de travaux d'entretien sur l'installation (1) de convoyeur à courroie, on utilise les premiers moyens (15a) de fixation et/ou les deuxièmes moyens (15b) de fixation qui ont été défaits à nouveau pour la production de la liaison entre le stator (7a) et le rotor (7b) et on sépare l'entraînement (4) de l'arbre (5) d'entraînement.

14. Installation (1) de convoyeur à courroie ayant un entraînement (4) sans arbre suivant l'une des revendications 1 à 5.
